(19) Europäisches Patentamt / European Patent Office / Office européen des brevets

(11) **EP 3 956 497 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **20719931.6**

(22) Anmeldetag: **14.04.2020**

(51) Internationale Patentklassifikation (IPC):
**C25B 15/02** (2021.01)    **C25B 15/08** (2006.01)
**C25B 1/00** (2021.01)    **H01M 8/18** (2006.01)
**C25B 3/25** (2021.01)

(52) Gemeinsame Patentklassifikation (CPC):
**C25B 15/08; C25B 1/00; C25B 3/25; C25B 15/02;**
H01M 8/186; Y02E 60/50

(86) Internationale Anmeldenummer:
**PCT/DE2020/100295**

(87) Internationale Veröffentlichungsnummer:
**WO 2020/211904 (22.10.2020 Gazette 2020/43)**

(54) **SOLID OXIDE CELL [SOC]-BETRIEBSVERFAHREN**

SOLID OXIDE CELL (SOC) OPERATION METHOD AND SOLID OXIDE CELL (SOC) ASSEMBLY

PROCÉDÉS DE FONCTIONNEMENT DE CELLULE À OXYDE SOLIDE [SOC] AINSI QUE DISPOSITIF DE CELLULE À OXYDE SOLIDE [SOC]

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2019   EP 19169902**

(43) Veröffentlichungstag der Anmeldung:
**23.02.2022   Patentblatt 2022/08**

(73) Patentinhaber: **SunFire GmbH**
**01237 Dresden (DE)**

(72) Erfinder:
• **POSDZIECH, Oliver**
**01109 Dresden (DE)**
• **STROHBACH, Thomas**
**01309 Dresden (DE)**
• **BLUMENTRITT, Robert**
**01159 Dresden (DE)**
• **SCHWARZE, Konstantin**
**01277 Dresden (DE)**
• **GRESS, Carolin**
**01445 Radebeul (DE)**

(74) Vertreter: **Hauck Patentanwaltspartnerschaft mbB**
**Postfach 11 31 53**
**20431 Hamburg (DE)**

(56) Entgegenhaltungen:
WO-A1-2018/216987    US-A- 5 306 409
US-A1- 2016 040 310    US-B1- 8 709 221

**Beschreibung**

Die Erfindung betrifft ein Solid Oxide Cell [SOC]- Betriebsverfahren, wobei die SOC wenigstens in einem SOEC-Betriebsmodus betreibbar ist, wobei die SOC im SOEC-Betriebsmodus im Wesentlichen in einem thermoneutralen Betriebspunkt gefahren wird, wobei die Regelung auf den Betriebspunkt durch eine Pulsweitenmodulation der zugeführten elektrischen Leistung mit einer Periodendauer T erfolgt und wobei die Periodendauer T kleiner als die Zeit ist, die die Edukte zum Passieren eines Aktivbereichs der SOC benötigen.

Aus dem **Stand der Technik** sind unterschiedliche Verfahren und Anordnungen bekannt, um eine Solid Oxide Cell [SOC] zu betreiben. Es wird ergänzend auf die seitens der Anmelderin bereits eingereichten vielzähligen Anmeldungen hingewiesen.

Aus der Druckschrift US 5,312,699 B1 ist ein kompaktes Energiespeichersystem bekannt, das effizient elektrische Energie erzeugen kann, indem es überschüssige elektrische Energie zunächst gespeichert hat, wobei das Energiespeichersystem eine Elektrolyse- und Brennstoffzelle mit einem Festoxidelektrolyten, ein Dampfzufuhrsystem zum Zuführen von Dampf zur Zelle, einen Wasserstoffspeicher und einen Sauerstoffspeicher zum Speichern von in der Zelle erzeugtem Wasserstoff und Sauerstoff, ein Wärmetauschersystem zur Aufnahme von Wärme des Abgases aus der Zelle ein Raumheizungs-Heißwasserzufuhrsystem zum Erwärmen von Wasser unter Verwendung von aus dem Abgas gewonnener Wärme, und ein Raumheizungs-Kaltwasserzufuhrsystem, das mit einer Absorptionskältemaschine für Kühlwasser durch den Absorptionsprozess in Verbindung steht unter Verwendung von Wärme, die aus dem Wärmetauschersystem gewonnen wird, aufweist.

Weiter ist aus der Druckschrift EP 1 618 622 B1 ein System zur Verwendung von Brennstoffzellen in stationären bzw. mobilen Geräten mit einem stabilen bzw. instabilen Lastprofil bekannt, wobei hier eine Brennstoffzelle, ein Puffer zum Speichern von überschüssiger Energie, der als Regelsystem zwischen der Brennstoffzelle und der Energieverbrauchseinheit dient, eine Abladeeinrichtung zum Ablassen von Energie, wenn der Puffer voll ist oder je nach Bedarf, ein Energieerzeuger bzw. -konverter zum Umwandeln von Energie bei Bedarf in eine andere Energieform, bei einem höheren Energiebedarf, als die Brennstoffzelle erfüllen kann, oder zum Umwandeln von Energie, die nicht verwendet wird und die in einer anderen Form gespeichert werden soll, oder zum Umwandeln von Energie der in dem Puffer gespeichert ist, der in einer anderen Form abgeladen werden soll, vorgesehen sind.

Ferner wird auf die Offenbarung von K. Schwarze, O. Posdziech, S. Kroop, N. Lapeña-Rey, J. Mermelstein, "Green Industrial Hydrogen via Reversible High-Temperature Electrolysis"; ECS Transactions, 2017, Vol. 78, 1 hingewiesen, aus der die Bereitstellung von Wasserstoff und Synthesegas in einer industriellen Umgebung mittels Hochtemperaturelektrolyse (SOEC) oder reversibler Brennstoffzelle (RSOC) offenbart wird, allerdings wird im Stand der Technik nicht beschrieben, wie die Betriebsführung der SOC überhaupt erfolgen könnte, um einem Verwender der Anordnung einen maximalen Nutzen zu generieren, so dass ein wirtschaftlicher Betrieb möglich ist, und welche apparatetechnische Ausführung dazu erforderlich ist.

In der Offenbarung von Q. Fu, J. Schefold, A. Brisse, J. U.Nielsen, "Durability Testing of a High-Temperature Steam Electrolyzer Stack at 700 °C" werden schnelle AN/AUS Zyklen an einer SOEC getestet. Die Haltezeit einer Betriebsphase lag dabei bei mehr als 30 Sekunden. Die zugeführte Dampfmenge wurde so gewählt, dass die SOEC in der AN-Phase ausreichend mit Dampf versorgt wird. Ein Problem dabei ist, dass während der AUS-Phase Dampf ungenutzt die SOEC passiert.

US 2016/040310 A1 beschreibt ein SOEC-Betriebsverfahren, wobei die SOEC in einem thermoneutralen Betriebspunkt gefahren wird, wobei die Regelung auf den Betriebspunkt durch eine Pulsweitenmodulation der zugeführten elektrischen Leistung erfolgt.

Die **Probleme im Stand der Technik** sind im Wesentlichen die Unwirtschaftlichkeit bestehender Systeme und Betriebsverfahren, da diese nur in der Lage sind, unter zu hohen Kosten entsprechende SOC's in Anlagen zu integrieren. Insbesondere erfolgen Betriebspunktänderungen langsam und diese sind im Wesentlichen mit großen Temperaturänderungen der SOC verbunden, was wiederum zu erheblichen wirtschaftlichen und technischen Nachteilen führt.

Es wurden insbesondere durch tiefergehenden Forschungs- und Entwicklungsaktivitäten durch die Erfinder entsprechende Nachteile beim Stand der Technik erkannt:

- Betrieb von SOC's erfolgt losgelöst vom Bedarf bzw. Angebot von Industrieanlagen;
- statische Regelung einer SOC im "Normalbetrieb";
- SOC-Systeme reagieren thermisch träge, wodurch der Wechsel von Betriebspunkten deutlich verlangsamt wird und letztendlich eine nur geringe Dynamik wenn überhaupt zugelassen werden würde;
- im Teillastbetrieb der Elektrolyse oder im Hot-Standby sinkt die Temperatur des Brennstoff- / Elektrolysezellenstapels (Stacks), wodurch die Dynamik begrenzt oder gar eine schnelle dynamische Regelung ausgeschlossen ist, insbesondere da der Stack erst wieder auf Betriebstemperatur kommen muss;
- eine rSOC-Umschaltung ist träge, da die Temperatur des Heizers bzw. des Stacks zu niedrig ist und Spannungsgrenzen unter- bzw. überschritten werden;
- bei Änderungen der Last ändert sich die Stacktemperatur, wodurch sich die thermomechanische Beanspruchung des Stacks erhöht, was zu einem frühzeitigem Stackversagen führen kann;

- ein großer Nachteil von SOC's ist die hohe Betriebstemperatur, die zu längeren Anlaufzeiten und mechanischen und chemischen Verträglichkeitsproblemen führt;
- für den Fall, dass eine Elektrolyse in der SOC hochgefahren werden soll, muss erst die Temperatur hierzu steigen, bis die volle Leistung erreicht wird, sonst steigen die Stackspannungen in einen Bereich (größer 1.6 ... 2.0 V pro Zelle - aus heutiger Sicht), der ein irreversibles Versagen des Stacks zur Folge hätte,
- schnelle SOEC-Zyklen sind nur mit geringem Gasumsatz auf Grund der fehlenden dynamischen Änderung möglich, womit eine geringe Effizienz der Energieumwandlung verbunden ist.

Durch diese erkannten Probleme des bekannten Standes der Technik haben sich die Erfinder die **Aufgabe** gestellt, eine Möglichkeit zu schaffen, hocheffizient Energie umzuwandeln, wobei dies dynamisch stattfinden soll und hierzu eine im Stand der Technik bekannte SOC angewandt werden soll, mit wenigstens einem SOEC-Betriebsmodus .

**Gelöst** wird diese Aufgabe mit einem Solid Oxide Cell [SOC]- Betriebsverfahren gemäß Hauptanspruch.

Verfahrensgemäß ist das Solid Oxide Cell [SOC]- Betriebsverfahren, wobei die SOC wenigstens in einem SOEC-Betriebsmodus betreibbar ist, dadurch gekennzeichnet, dass die SOC in einem thermoneutralen Betriebspunkt gefahren wird bzw. dass die SOC im Wesentlichen oder genau in einem thermoneutralen Betriebspunkt gefahren wird. Hierdurch ist eine möglichst hocheffiziente Umwandlung von Energie mittels einer entsprechend erfindungsgemäßen SOC möglich.

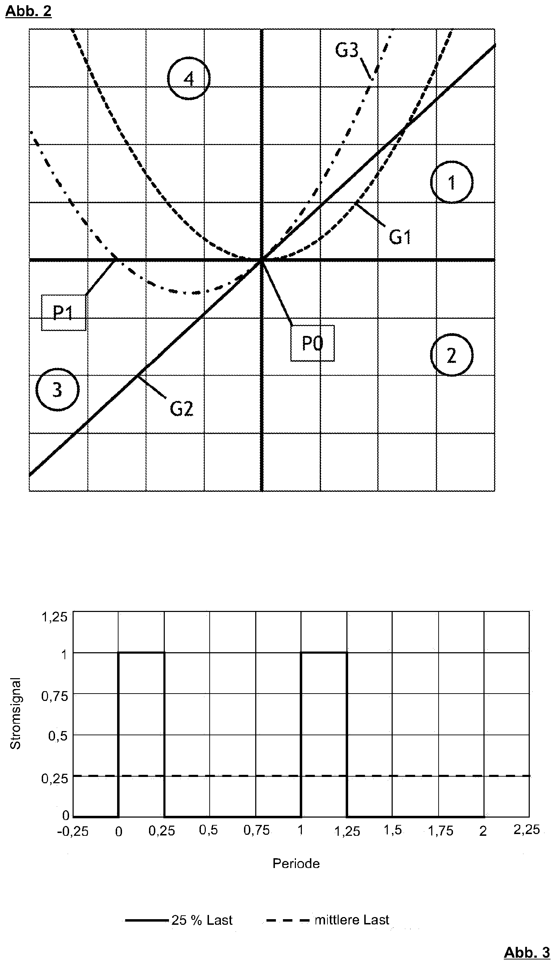

Ein thermoneutraler Betriebspunkt zeichnet sich dadurch aus, dass die durch den Stromfluss generierte Wärmeleistung (Exothermie durch ohmschen Verlust, Graph G1 in Abb. 2) genau der benötigten Wärmeleistung der endothermen Elektrolyse (Graph G2 in Abb. 2) entspricht. Dieser Betriebspunkt ist durch den Punkt P1 in Abb. 2 durch den Schnittpunkt des Graphen G3 mit der x-Achse gekennzeichnet. Die Betriebsspannung in diesem Betriebspunkt ist die thermoneutrale Spannung $U_{tn}$, Gl. 1, wobei $\Delta H_r$ die Reaktionsenthalpie und F die Faradaysche Konstante ist.

Die thermoneutrale Spannung ist anhängig von der Temperatur sowie der Gaszusammensetzung.

$$U_{tn} = \frac{\Delta H_r}{2F} \qquad (1)$$

Die Ohmsche Wärme folgt einem quadratischen Verlauf, entsprechend Gl. 2.

$$P_{Ohm} = R * I^2 \qquad (2)$$

Dabei ist R der Innenwiderstand der SOC. Der Innenwiderstand ist abhängig von der Temperatur und demnach auch die Exothermie. Dieser Zusammenhang wird bei der Regelung ausgenutzt, da er stets zu einem stabilen Betriebsverhalten führt. Bei Vorgabe einer Stromstärke stellt sich ein Gleichgewicht bei der Temperatur ein, bei der der Widerstand so hoch ist, dass die Exothermie des ohmschen Verlusts die Endothermie der Elektrolyse genau ausgleicht. Ist der Widerstand höher (exotherm) steigt die Stacktemperatur an, ist der Widerstand geringer (endotherm), sinkt die Stacktemperatur. Es ist offensichtlich, dass sich bei verschiedenen Betriebspunkten unterschiedliche Betriebstemperaturen für den thermoneutralen Betrieb ergeben. Durch einen sogenannten gepulsten SOEC Betrieb soll die SOC im SOEC-Betriebsmodus erfindungsgemäß im Wesentlichen diskret nur in 2 Punkten betrieben werden: P0 (Leerlaufbetrieb) und P1 (thermoneutraler Betrieb).

*Erläuterungen zum gepulsten SOEC-Betrieb:*

Ein dynamischer SOEC-Betrieb im thermoneutralen Betriebspunkt erfordert eine schnelle Umschaltfähigkeit zwischen einem Teillast- bzw. Leerlaufbetrieb und einem Vollastbetrieb in beiden Richtungen. Ein Teillastbetrieb ist im stationären Fall im SOEC-Betrieb immer mit einer Temperaturabsenkung des Systems bzw. des Stacks verbunden, siehe Abb. 2, Betrieb im Quadrant 3. Die Kurve G3 (gesamte Wärmebilanz) ist negativ, das System kühlt ab. Die Temperaturänderung benötigt Zeit, da das System eine endliche Wärmekapazität hat. Der Wechsel von Teillast auf Volllast führt zu einer Temperaturerhöhung. Die Temperaturerhöhung muss im herkömmlichen Betrieb abgewartet werden, um eine Überhitzung des Systems zu vermeiden. Die Zu- oder Abfuhr von Wärmeenergie aus oder in die SOC benötigt Zeit und ist mit Verlusten verbunden.

Die Anwendung der Pulsweitenmodulation ermöglicht eine kontinuierliche Modulierung der Systemleistung ohne dabei das Temperaturprofil innerhalb des SOC-Stacks zu ändern, auch in kurzer Zeit. Dies erhöht zudem die Langlebigkeit der SOC, da die thermomechanischen Beanspruchungen durch zyklische Temperaturänderungen verringert werden und ermöglicht zudem den schnellen Wechsel in andere Betriebsmodi, da sich die Temperatur auch im SOEC-Teillastmodus nicht verringert.

Im Idealfall wird die SOC genau im thermoneutralen Punkt betrieben und die Temperatur der Zelle bzw. des Stacks kontinuierlich gemessen. Unter realen Bedingungen können prozessbedingte Schwankungen, z.B. Schwankungen in der Temperatur der zugeführten Edukte, zu geringfügigen Abweichungen der Temperatur von dem thermoneutralen Punkt führen. Für das erfindungsgemäße Verfahren ist ein Temperaturbereich als Prozessfenster um den thermoneutralen Punkt zu definieren, um die SOC im SOEC-Betriebsmodus im Wesentlichen in ihrem thermoneutralen Betriebspunkt zu betreiben, also die Temperatur in dem Prozessfenster zu regeln. Dafür kann ein Regelkreis vorgesehen sein, mittels welchem der Tastgrad bzw. die Pulsdauer in Abhängigkeit von der gemessenen Temperatur so vorgegeben werden, dass die in die Zelle eingetragene elektrische Leistung und die durch den ablaufenden Elektrolyseprozess aufgenommene Leistung im Gleichgewicht stehen und die Temperatur durch eine Verringerung oder Erhöhung der Pulsdauer graduell abgesenkt bzw. erhöht werden kann und somit in dem Prozessfenster verbleibt. Eine Grobregelung der Temperatur kann, wie nachfolgend beschrieben, durch die Regelung des Volumenstroms und der Temperatur der Zelle zugeführten Edukte erfolgen.

Erfindungsgemäß erfolgt die Regelung der gepulsten Leistung so, dass die Periodendauer eines Pulses kleiner als die Zeit ist, die die Edukte zum Passieren des Stack-Aktivbereichs benötigen.

Eine mögliche Umsetzung ist, eine Periodendauer T, bzw. Pulsfrequenz f = 1 / T zu definieren und diese für den gesamten Modulationsbereich konstant zu setzen. Die Periodendauer kann in geeigneter Weise auf einen Betrieb bei maximaler Last ausgelegt werden, genauer gesagt auf den Betriebspunkt mit der maximalen Strömungsgeschwindigkeit der zugeführten Edukte. Im Teillastbetrieb wie im Volllastbetrieb kann die Frequenz höher als diese notwendige Mindestfrequenz gewählt werden. Der Prozessgasvolumenstrom wird entsprechend der zeitlich gemittelten Stromstärke und dem gewünschten Umsatzgrad eingestellt. Eine Möglichkeit besteht darin zunächst den Prozessgasvolumenstrom auf den Peak-Strom einzustellen (Tastgrad = 100%), wobei sich der Stack bereits im Pulsbetrieb befindet. Der Umsatzgrad ist proportional zum Tastgrad niedriger. Danach wird der Prozessgasvolumenstrom auf den Tastgrad angepasst. Wenn der Tastgrad 50% beträgt (= 50% Teillast), wird der Prozessgasvolumenstrom auf 50% reduziert.

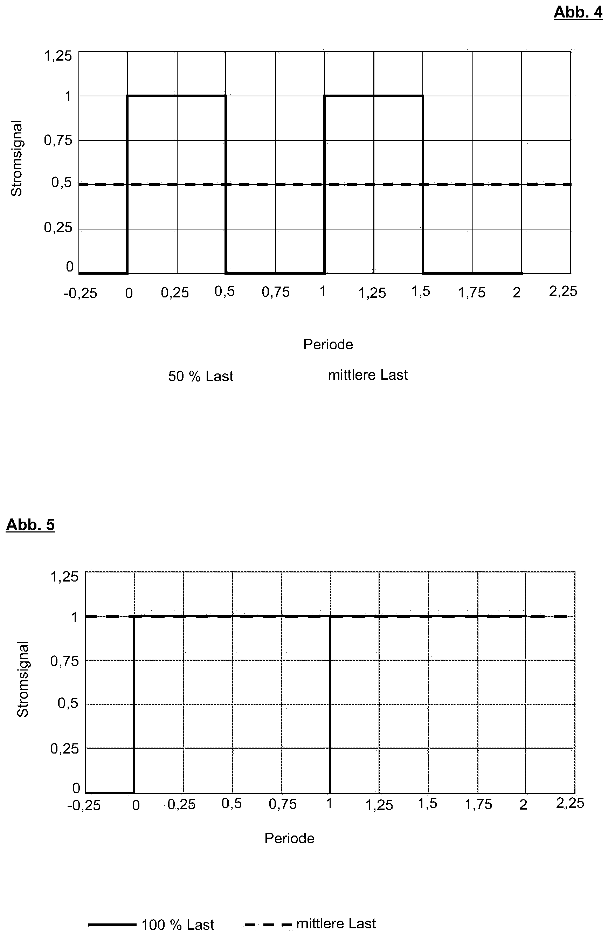

In einer entsprechenden speziellen Ausgestaltung kann die Konvertierungsrate der Edukte an die über die Stromimpulse gemittelte Leistung angepasst werden, wobei diese im Bereich von 70 bis 85% liegt (vgl. Abb. 3 bis 5).

Besonders geeignet ist das erfindungsgemäße Verfahren für die Anwendung in Verbindung mit der Co-Elektrolyse, bei welcher eine Umsetzung von $H_2O$ und $CO_2$ in CO und $H_2$ erfolgt. Dabei kann die Pulsweitenmodulation angewendet werden, um das Risiko der Rußabscheidung im Teillastbetrieb zu reduzieren. Im Teillastbetrieb besteht das Risiko einer Absenkung der Systemtemperatur, wodurch die Rußabscheidung thermodynamisch begünstigt wird. Durch das erfindungsgemäße Verfahren kann die Temperatur auch im Teillastbetrieb nahe am im Wesentlichen thermoneutralen Punkt gehalten werden, so dass eine Rußabscheidung unterdrückt und eine Zerstörung der Zelle vermieden werden kann. Die Teillastfähigkeit kann für solche Co-Elektrolysesysteme von Vorteil sein, wenn diese an eine nichtkontinuierliche $CO_2$-Quelle gekoppelt und die Verfügbarkeit von $CO_2$ veränderlich ist und/oder $CO_2$-Abscheider analog zu dem SOC-System in Abhängigkeit des Strompreises und/oder der Stromverfügbarkeit betrieben werden. Das erfindungsgemäße Verfahren kann somit eingesetzt werden, um Co-Elektrolyseverfahren teillastfähig zu machen, ohne dabei auf $CO_2$-Speicherlösungen zurückgreifen zu müssen, so dass sich Mehrkosten für solche Komponenten vermeiden lassen. Für den erfindungsgemäßen Betrieb kann dafür der Tastgrad für die Pulsweitenmodulation in Abhängigkeit von der Verfügbarkeit von $CO_2$ vorgegeben sein.

Die Vorgabe des Tastgrads in Abhängigkeit von Strompreis und/oder Stromverfügbarkeit und/oder der Verfügbarkeit von $CO_2$ kann mittels einer in der Umrichtersteuerung hinterlegten Kostenfunktion oder einer Look-Up-Tabelle erfolgen. Ebenso kann die Temperaturabhängigkeit für den Tastgrad und/oder die Pulsdauer mittels einer Look-Up-Tabelle erfolgen.

In einer bevorzugten Ausführungsvariante kann die SOC als dynamischer Energiewandler betrieben werden, wobei ein Energiewandeln in Abhängigkeit des Strompreises und/oder der Stromverfügbarkeit erfolgt, was zu einer hocheffizienten und sehr wirtschaftlichen Variante des Energiewandeln und Energiepuffern führt. Hierbei ist dies insbesondere ökonomisch interessant, da durch das Anbieten von Regelleistung die Wirtschaftlichkeit des Systems erhöht werden kann. Aus technischer Sicht ist die Umsetzung dieser Ausgestaltung interessant, da ein dynamischer Energiewandler schnelle Lastumschaltungen ermöglicht.

Ein ständiges Gleichgewicht zwischen Stromerzeugung und -abnahme ist eine wichtige Voraussetzung für einen stabilen und zuverlässigen Netzbetrieb. Die Übertragungsnetzbetreiber (ÜNB) halten dazu im Rahmen ihrer Systemverantwortung Regelleistung vor, um den Kunden eine zuverlässige Stromversorgung zu gewährleisten.

Abweichungen werden auf der Verbraucherseite durch Schwankungen im Einspeise- und Abnahmeverhalten oder auf der Erzeugungsseite durch schwankende Erzeuger (erneuerbare Energien) oder Störungen (z.B. Kraftwerksausfälle) hervorgerufen. Der ÜNB vergütet Anbieter für das Vorhalten von Regelleistung, die entweder ihren Verbrauch verringern oder zusätzliche elektrische Leistung ins Netz einspeisen. Dazu ist eine schnelle Lastumschaltung erforderlich. Dabei wird zwischen Primärregelung (automatische vollständige Aktivierung bis 30 Sekunden), Sekundärregelung (vollständige Erbringung innerhalb von maximal 5 Minuten) und Tertiärregelung (vollständige Aktivierung binnen 15 Minuten) unterschieden. Zur Bereitstellung der Regelleistung ist ein schnelles Umschalten von Betriebspunkten notwendig.

In den meisten industriellen Anwendungen ist die Leistungsaufnahme vertraglich beschränkt. Bei Überschreitung der Maximalleistung steigen die Stromkosten sehr stark an. Deshalb wird, insbesondere in großen Firmen, ein aktives Lastmanagement betrieben und Verbraucher entsprechend abgeschaltet.

Ein Lastmanagement kann durchgeführt werden, um auf sich ändernde Randbedingungen reagieren zu können. Ein Teillastbetrieb eines Systems, welches aus mehreren SOC-Modulen besteht, kann so realisiert werden, dass nur eine Teilmenge der Module betrieben wird, wobei sich die übrigen Module in einem sogenannten Hot-Standby Modus befinden. Beim Hot-Standby Modus befindet sich ein SOC-Modul nahezu bei Betriebstemperatur, es finden jedoch keine elektrochemischen Reaktionen statt. Die Lastanfahrt kann so relativ schnell erfolgen, da lediglich die Prozessgase und die Elektronik zugeschalten werden müssen. Eine weitere Möglichkeit besteht in dem erfindungsgemäßen Betrieb einzelner SOC-Module.

Eine direkte Kopplung einer rSOC-Anlage mit einem SOEC-Betriebsmodus an fluktuierende erneuerbare Energiequellen (Windenergie, Photovoltaik) erfordert ebenfalls eine dynamische Reaktion des in Elektrolyse betriebenen Systems.

Eine vorteilhafte Weiterbildung des erfindungsgemäßen Verfahren ist der spannungsgeführte Betrieb zur schnellen Umschaltung zwischen NULL und Last, wobei beim spannungsgeführten Betrieb eine Spannung vorgegeben wird und die Stromstärke variabel so vorgegeben wird, dass die pro Puls benötigte Leistung eingestellt werden kann.

Im Fall, dass die Betriebstemperatur oberhalb oder unterhalb einer maximal zulässigen Temperatur liegt, muss dem Stack Wärme zugeführt oder entzogen werden. Hierfür erfolgt eine Regelung der Temperatur der der SOC zugeführten Edukte. Soll der Stack gekühlt werden, so muss der Luftvolumenstrom erhöht und/oder die Luft- und/oder Gaseintrittstemperatur verringert werden. Soll der Stack geheizt werden, muss der Luftvolumenstrom erhöht und/oder die Luft- und/oder Gaseintrittstemperatur erhöht werden. Die Wärme kann einem Hochtemperaturspeicher entnommen werden oder elektrisch durch Prozessgasvorheizer zugeheizt werden.

Diesbezüglich können die Prozessgaseintrittstemperaturen bevorzugt vorausgewählt werden, wobei dies in Abhängigkeit der Beobachtung des Zustands der SOC und durch die Vorgabe eines Zielbetriebspunktes erfolgt.

Weiterhin sind Leistungsspitzen in der Stromerzeugung mit erneuerbaren Energien häufig nicht wirtschaftlich auf der Verbrauchsseite abdeckbar, da dadurch z.B. ein Elektrolyseur überdimensioniert wird und/oder das Netz diese Energie nicht aufnehmen kann (Abregelung von erneuerbaren Energien). Hier bietet es sich an, Strom oder Abwärme des SOFC-Betriebs als Hochtemperaturwärme zu speichern, da die Umwandlung von Strom in Wärme nur mit sehr geringen Investitionskosten verbunden ist und Wärmespeichermaterial sehr kostengünstig ist.

Weiterhin kann Überschussstrom als Wärme gespeichert werden, die später nutzbar gemacht werden kann. Dazu kann der Strom dazu verwendet werden, um einen Speicher elektrisch zu beheizen.

Eine optimierte Temperaturführung kann somit auch während Laständerungen und/oder Betriebsmodusänderungen erfolgen. Unterschiedliche Lastpunkte haben unterschiedliche Gleichgewichtstemperaturen, wobei bevorzugt ein thermoneutraler Betrieb realisiert werden soll. Bei einer Lastpunktänderung werden die Eingangsparameter Prozessgaseintrittstemperatur bereits bei Lastanfahrt so eingestellt, dass sie den erwarteten Werten des Zielbetriebspunktes entsprechen. Damit wird der Zielbetriebspunkt schneller erreicht, da die Regelung nur noch justierend wirken muss. Die Zielwerte können sich während der Laufzeit ändern. Dies kann durch in situ Betrachtung des Systems berücksichtigt werden, indem durch Auswertung der Betriebsdaten der Innenwiderstand der Stacks und damit der Zustand des Systems berechnet wird.

Anordnungsgemäß ist die Solid Oxide Cell [SOC]-Anordnung in einer wirtschaftlich besonders attraktiven und aus thermodynamischer Sicht bedeutsamen Variante bevorzugt mit dem SOC-Betriebsverfahren gemäß dem oben beschrieben Merkmalen ausgestattet, wobei die SOC mit einer Steuerung ausgestattet ist, wobei diese Steuerung das entsprechende oben beschriebene Solid Oxide Cell [SOC]- Betriebsverfahren ausführen kann.

Zur weiteren Optimierung und Verbesserung kann die erfindungsgemäße SOC-Anordnung wenigstens eine anordnungsgemäße Ausgestaltung ausgewählt aus:

- einer Temperaturmessanordnung vor dem Stack zur Regelung der Eintrittstemperatur der Prozessgase;
- einem elektrischen Heizer und/oder Hochtemperaturspeicher, wobei beide Einheiten kombinierbar sind, zur Erwärmung der zugeführten Prozessgase,
- Bypässen zur wenigstens teilweisen Umgehung des elektrischen Heizers und/oder des Hochtemperaturspeichers durch einen Teilstrom der zuzuführenden Prozessgase;
- eine Temperaturmessanordnung des Hochtemperaturwärmespeichers, um dessen Ladezustand ermitteln und die Zu- oder Abführung von Wärme regeln zu können;
- einer Leistungsregelungsanordnung, aufweisen.

Nachfolgend werden Ausführungsbeispiele der Erfindung anhand der beiliegenden Abbildungen in der nachfolgenden Beschreibung detailliert beschrieben, wobei diese die Erfindung erläutern sollen und nicht beschränkend zu werten sind:

Es zeigen:

Abb. 1 eine schematische Darstellung einer SOC-Anordnung, die für die Ausführung des erfindungsgemäßen Verfahrens geeignet ist;

Abb. 2    die Anteile des Gesamtwärmestroms (y-Achse) in einer SOC in Abhängigkeit der Stromdichte (x-Achse);

Abb. 3    eine erste Darstellung eines ersten Betriebsmodus;

Abb. 4    eine zweite Darstellung eines zweiten Betriebsmodus und

Abb. 5    eine dritte Darstellung eines dritten Betriebsmodus.

An dieser Stelle soll darauf hingewiesen werden, dass die Abbildungen die Erfindung nicht beschränken sollen, sondern die Erfindung anhand von vorteilhaften Ausgestaltungen erläutern sollen.

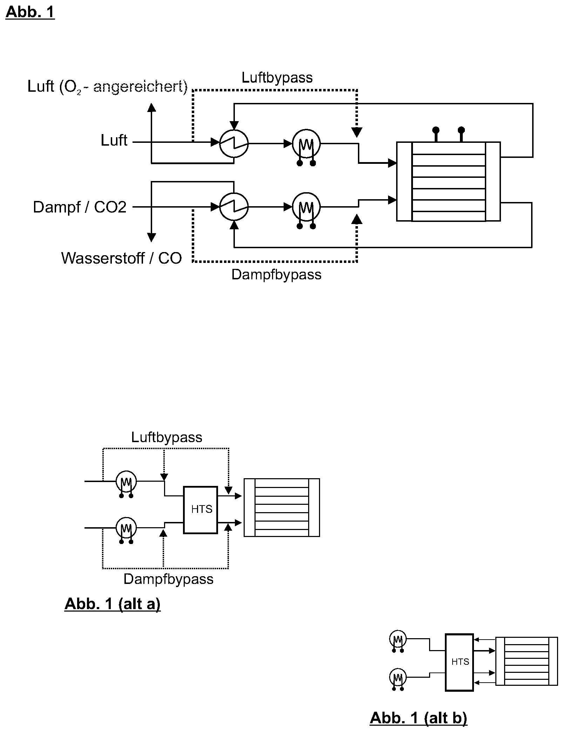

**Abb. 1** zeigt eine schematische Darstellung einer SOC-Anordnung, die für die Ausführung des erfindungsgemäßen Verfahrens geeignet ist.

Es ist ein einfaches SOEC System dargestellt. Es findet eine getrennte Erwärmung der Edukte durch Wärmetauscher statt. Die eintretende Luft wird zunächst über einen Wärmetauscher mit der austretenden Luft erwärmt. Gleiches gilt für das zugeführte Dampf-CO2-Gemisch. Mit einem elektrischen Heizer kann die Medieneintrittstemperatur justiert werden. Die beiden Gasströme werden im SOEC-Stack zur Energieumwandlung zusammengeführt. Der Elektrolysezellenstapel umfasst einen Wechselrichter (nicht dargestellt), welcher eingerichtet ist, eine pulsförmige Spannung für den Betrieb der Elektrolysezellen bereitzustellen. Der Wechselrichter ist an ein Energieversorgungsnetz angeschlossen und eingerichtet, aus diesem Leistung zu entnehmen und diese für die Elektrolyse bereitzustellen. Der Wechselrichter ist weiterhin eingerichtet eine Pulsweitenmodulation der an den Elektrolysezellen anliegenden Spannung durchzuführen. Die austretenden Gasströme verlassen den Stack getrennt voneinander. Diese Anordnung kann durch Kombination mit Bypässen (gepunktete Linien) ergänzt werden. Die Bypässe ermöglichen eine schnellere Temperaturänderung der Eintrittsmedien, da sowohl elektrische Heizer als auch Wärmetauscher gasseitig sofort überbrückt werden.

Weiter ergänzt werden kann die Anordnung entsprechend der Abb. 1 (alt a) durch einen Hochtemperaturspeicher, der in einer Variante beispielsweise nach den elektrischen Heizern oder auch alternativ dazu angeordnet sein kann. Es können beide Medienzuleitungen von dem Hochtemperaturwärmetauscher mit Wärme beliefert werden. Der Speicher kann mit elektrischen Heizern beladen werden, die entweder in den Medienleitungen angeordnet oder auch im Speicher selbst vorgesehen sein können. Hier kann insbesondere Überschussstrom für die elektrischen Heizer verwendet werden, um wirtschaftlich zu arbeiten. Auch diese Anordnung kann mit Bypässen ergänzt werden, wobei entweder der elektrische Heizer und/oder der Hochtemperaturspeicher durch einen Bypass überbrückt werden. Auch in diesem Fall können die Medieneintrittstemperaturen bei Bedarf schnell geändert werden.

In einer weiteren Ausführungsvariante entsprechend der Abb. 1 (alt b) kann der Hochtemperaturspeicher derart ausgestaltet sein, dass er zum einen Wärme an die Medienleitungen abgeben kann und gleichzeitig oder auch zeitlich versetzt Energie von dem Stack aufnehmen kann, wobei quasi eine Beladung des Hochtemperaturspeichers durch die Abwärme des Stacks erfolgt.

In einer weiteren Ausführungsvariante entsprechend der Abb. 1 (alt b) können Bypässe in die Medienzuleitungen integriert werden, wobei die Bypässe die Wärmetauscher überbrücken. Die Medienzuleitungen können den Hochtemperaturwärmespeicher und/oder die Medienleitungen vor dem Wärmetauscher mit dem Stack verbinden.

In **Abb. 2** sind die Anteile des Gesamtwärmestroms (y-Achse) in einer SOC in Abhängigkeit der Stromdichte (x-Achse) dargestellt. Die Quadranten 1 und 2 liegen in Bereichen positiver Stromdichte und stellen damit den SOFC-Betrieb dar. Die Quadranten 3 und 4 liegen in Bereichen negativer Stromdichte und stellen damit den SOEC Betrieb dar. Die Ohmsche Wärme folgt einem quadratischen Verlauf.

Dieser Verlauf ist durch den Graph G1 dargestellt. Die Reaktionswärme besitzt einen linearen Zusammenhang mit der Stromdichte, siehe G2 in der Abbildung. Die Gesamtwärme ist die Summe aus ohmscher Wärme und Reaktionswärme und wird durch einen quadratischen Zusammenhang beschrieben, siehe G3 in der Abbildung. Das Minimum dieser Kurve ist entsprechend der Reaktionswärme zum 3. Quadranten hin verschoben. Befindet sich der Graph G3 im 3. Quadranten ist die Wärmebilanz negativ, der Stack wird endotherm betrieben. Liegt der Graph G3 im 1. oder 4. Quadranten, ist die Wärmebilanz positiv und der Stack wird exotherm betrieben. Dadurch entstehen zwei Schnittpunkte (P0 und P1) mit der x-Achse. In diesen Punkten gleicht sich die Reaktionswärme mit den Ohmschen Verlusten aus. Der Stack befindet sich in einem thermoneutralem Betriebspunkt. Dieser Zusammenhang soll genutzt werden, um die SOC im SOEC-Betriebsmodus zu regeln. Anstatt einen vorgegebenen Teillastpunkt konstant zu halten, was zwangsläufig zur Abkühlung des Stacks führt, wird zwischen dem thermoneutralen Punkt und dem Nullpunkt hochfrequent gewechselt, in dem eine Pulsweitenmodulation angewendet wird.

In den **Abbildungen 3, 4 und 5** sind mögliche Betriebsmodi für den SOEC-Betriebsmodus beispielhaft dargestellt. Dabei variiert der Tastgrad zwischen 25%, 50% und 100%. Dies entspricht möglichen Lastpunkten bei 25%, 50% und 100%.

Da sowohl im Nullpunkt (Hot-Standby) P0 als auch im thermo-neutralen Betriebspunkt dem Stack keine Wärme entzogen wird, kann die Temperatur auch im Teillastmodus konstant hoch gehalten werden. Dies ermöglicht auch einen schnellen Wechsel in andere Betriebsmodi, zum Beispiel dem thermoneutralen SOEC-Betrieb bei Nennlast, da eine kleinere Temperaturänderung überwunden werden muss.

Der zugeführte Dampfstrom kann so gewählt werden, dass er einem 100%-Betriebspunkt entspricht. Jedoch führt es gerade in hohen Teillast-Punkten zu einem hohen Anteil an ungenutztem Dampf. Das Brenngasvolumen der SOC kann als Kapazität genutzt werden, so dass im Mittel auch höhere Dampfumsätze von z.B. 70% bis 85% im Teillastbetrieb gefahren werden können. Dazu ist es erforderlich, dass die Periodendauer T höchstens so groß ist, wie die Zeit $t_{BG}$, die das Brenngas zum Durchströmen des Aktivbereichs benötigt, da sonst eine Dampfverarmung insbesondere in Teillastpunkten eintreten kann. Das Verhältnis aus $t_{BG}$ und T soll demnach größer gleich 1 sein. Im vorliegenden Produkt beträgt die Strömungsgeschwindigkeit im Brenngasraum im Betriebsfall etwa 1 m/s. Auf 0,1 m Strömungslänge des Aktivbereiches passiert das Brenngas den Aktivbereich demnach in etwa 0,1 s. Die erforderliche Frequenz der Pulsweitenmodulation beträgt demnach mindestens 10 Hz. Bevorzugt soll bei höheren Frequenzen moduliert werden, um zeitliche Schwankungen des Betriebes zu verringern.

**Patentansprüche**

1. Solid Oxide Cell [SOC]- Betriebsverfahren, wobei die SOC wenigstens in einem SOEC- Betriebsmodus betreibbar ist,
   **dadurch gekennzeichnet, dass**
   die SOC im SOEC-Betriebsmodus in einem thermoneutralen Betriebspunkt gefahren wird, wobei die Regelung auf den Betriebspunkt durch eine Pulsweitenmodulation der zugeführten elektrischen Leistung mit einer Periodendauer T eines Pulses erfolgt, die kleiner als die Zeit ist, die die Edukte zum Passieren eines Stack-Aktivbereichs der SOC benötigen und ein Tastgrad in Abhängigkeit von einer gemessenen Temperatur der SOC vorgegeben ist.

2. SOC-Betriebsverfahren nach Anspruch 1,
   **dadurch gekennzeichnet, dass**
   für die Pulsweitenmodulation ein Tastgrad in Abhängigkeit des Strompreises und/oder der Stromverfügbarkeit vorgegeben ist.

3. SOC-Betriebsverfahren nach einem der vorangehenden Ansprüche,
   **dadurch gekennzeichnet, dass**
   für den SOEC-Betrieb als Edukt $CO_2$ bereitgestellt wird und für die Pulsweitenmodulation ein Tastgrad in Abhängigkeit der Verfügbarkeit von $CO_2$ vorgegeben ist.

4. SOC -Betriebsverfahren nach einem der vorangehenden Ansprüche,

**dadurch gekennzeichnet, dass**
eine Regelung des Betriebspunkts mittels spannungsgeführten Betriebes erfolgt.

**Claims**

1. A solid oxide cell (SOC) operating method, wherein the SOC can at least be operated in a SOEC operating mode,
   **characterized in that**
   in the SOEC operating mode, the SOC is run at a thermoneutral operating point, wherein the SOC is regulated at the operating point by a pulse-width modulation of the supplied electrical power with a period duration T of a pulse, which is less than the time which the reagents need to pass a stack active region of the SOC and a duty cycle is specified as a function of a measured temperature of the SOC.

2. The SOC operating method according to Claim 1,
   **characterized in that**
   a duty cycle is specified for the pulse-width modulation as a function of the electricity price and/or the electricity availability.

3. The SOC operating method according to one of the preceding claims,
   **characterized in that**
   $CO_2$ is provided as the reagent for the SOEC operation and a duty cycle is specified for the pulse-width modulation as a function of the availability of $CO_2$.

4. The SOC operating method according to one of the preceding claims,
   **characterized in that**
   the operating point is regulated by means of voltage-controlled operation.

**Revendications**

1. Procédé de fonctionnement de cellule à oxyde solide [SOC], dans lequel la SOC peut fonctionner au moins dans un mode de fonctionnement SOEC,
   **caractérisé en ce que**
   la SOC dans le mode de fonctionnement SOEC est amenée à un point de fonctionnement thermo-neutre, dans lequel le réglage sur le point de fonctionnement est effectué par une modulation de largeur d'impulsion de la puissance électrique alimentée avec une durée de période T d'une impulsion, laquelle est inférieure au temps nécessaire au passage des réactifs par une zone active de stack de la SOC et un rapport cyclique est défini en fonction d'une température mesurée de la SOC.

2. Procédé de fonctionnement de SOC selon la revendication 1,
**caractérisé en ce que**
pour la modulation de la largeur d'impulsion, un rapport cyclique est défini en fonction du coût du courant et/ou de la disponibilité du courant.

3. Procédé de fonctionnement de SOC selon l'une des revendications précédentes,
**caractérisé en ce que**
pour le fonctionnement SOEC, du $CO_2$ est utilisé comme réactif et pour la modulation de la largeur d'impulsion, un rapport cyclique est défini en fonction de la disponibilité du $CO_2$.

4. Procédé de fonctionnement de SOC selon l'une des revendications précédentes,
**caractérisé en ce que**
un réglage du point de fonctionnement est effectué au moyen d'un fonctionnement sous tension.

**Abb. 1**

Abb. 1 (alt a)

Abb. 1 (alt b)

Abb. 2

25 % Last       − − − mittlere Last

Abb. 3

Abb. 4

Periode

50 % Last                    mittlere Last

Abb. 5

Periode

——— 100 % Last        — — — mittlere Last

**IN DER BESCHREIBUNG AUFGEFÜHRTE DOKUMENTE**

**In der Beschreibung aufgeführte Patentdokumente**

- US 5312699 B1
- EP 1618622 B1
- US 2016040310 A1

**In der Beschreibung aufgeführte Nicht-Patentliteratur**

- **K. SCHWARZE ; O. POSDZIECH ; S. KROOP ; N. LAPEÑA-REY ; J. MERMELSTEIN.** Green Industrial Hydrogen via Reversible High-Temperature Electrolysis. *ECS Transactions,* 2017, vol. 78 (1
- **Q. FU ; J. SCHEFOLD ; A. BRISSE ; J. U.NIELSEN.** *Durability Testing of a High-Temperature Steam Electrolyzer Stack at 700 °C*